**Europäisches Patentamt**

**European Patent Office**

**Office européen des brevets**

(19)

(11) Veröffentlichungsnummer : **0 568 903 A1**

(12) # EUROPÄISCHE PATENTANMELDUNG

(21) Anmeldenummer : **93106829.0**

(22) Anmeldetag : **27.04.93**

(51) Int. Cl.$^5$ : **A62D 3/00,** C02F 1/52

(30) Priorität : **27.04.92 CS 1274/92**

(43) Veröffentlichungstag der Anmeldung :
**10.11.93 Patentblatt 93/45**

(84) Benannte Vertragsstaaten :
**AT BE CH DE DK ES FR GB GR IE IT LI LU NL
PT SE**

(71) Anmelder : **SAMAG MASCHINENFABRIK
SANGERSHAUSEN GmbH
Am Brandrain 5
O-4700 Sangershausen (DE)**

(72) Erfinder : **Masat, Jan Dr.
Sarecka 11
CS-16000 Praha (CS)**

(74) Vertreter : **Kastner, Hermann, Dipl.-Ing.
Osterholzallee 89
D-71636 Ludwigsburg (DE)**

(54) **Verfahren zur Aufbereitung von Materialien mit Gehalt an Schwermetallen.**

(57)    Die zu behandelnden Materialien werden in Gegenwart von Wasser mit Phosphat-Ionen versetzt, bis sich ein pH-Wert von weniger als 6,9 dauerhaft einstellt. Die überschüssigen Phosphat-Ionen werden mit Aluminium-III-Ionen und/oder Eisen-III-Ionen gebunden und das Gemisch auf einen alkalischen pH-Wert gebracht. Die Phosphat-Ionen werden vorzugsweise durch Zugabe von Phosphorsäure und/oder durch Zugabe von Phosphaten und von anorganischen Saüren beigegeben. Für die Alkalisierung wird vorzugsweise CaO verwendet.

EP 0 568 903 A1

Die Erfindung betrifft chemische Verfahren und Technologien, die zur Aufbereitung von durch Schwermetalle kontaminierten Materialien, wie z.B. Erdmaterialien, Schlämme, Schlacken aus Verbrennungsanlagen und Heizkraftwerken, Flugaschen usw., dienen.

In vielen Bereichen der industriellen Tätigkeit entstehen Materialien, die mit Rücksicht auf die Zusammensetzung besonders hinsichtlich des Schwermetallgehaltes nicht als umweltfreundlich betrachtet werden können. Laut den Umweltschutzbestimmungen können als umweltfreundlich oder unschädlich nur solche Materialien betrachtet werden, die den einzelnen Vorschriften genügen, die für solche Materialien oder Materialgruppn gelten. Daß sich das Material inert verhält, muß durch Teste bewiesen werden, die den langfristigen Einfluß natürlicher Wetterbedingungen auf freigelagerte Materialien auf nicht abgesicherten Flächen simulieren, z.B. das Einwirken von saurem Regen, aggressiven Grund- und Sickerwässern usw. (U.S. Environmental Protection Agency: Test Methods for Evaluating Solid Waste; der Schweizerische Bundesrat: Technische Verordnung über Abfälle /TVA/ vom 10.12.1990 usw.). Materialien, die den Anforderungen dieser Teste nicht genügen, können nicht für inert gehalten werden und müssen deshalb als besondere Abfälle gehandhabt werden. Sie könnenalso nur auf abgesicherten Deponien für entsprechend höhere Gebühr usw. untergebracht werden.

Es ist deshalb notwendig, solche Materialien so zu behandeln, daß sie in den Testen Werte erbringen, aufgrund derer sie in die Kategorie inerter Stoffe eingereiht werden können. Das heißt, daß die Kationen bestimmter Metalle und die Anionen bestimmter Säuren entweder beseitigt oder so gebunden werden müssen, daß keine Auslaugung stattfinden kann.

Die auf die Fixation der Schwermetalle orientierten bekannten Verfahren beruhen einerseits auf der Bildung verschiedener Überzüge, z.B. aus geschmolzenem Schwefel, Wasserglas und Calciumchlorid, Kunststoffen, Harzen u.ä. (HASS, H.J.: Chemikalienbeständige Einkapselung von Altlasten. Vortr. Technische Akademie Esslingen, 5/6.3.1987; STUPP, H.D.: Wasser Luft und Betrieb - Achema Report '88, 42-56) andererseits auf der Einarbeitung in Zementmörtel und Zementmischungen, die als s/s-Verfahren (Solidification/Stabilization) bezeichnet werden, die man besonders in USA entwickelt hat. (Factors affecting stabilization/solidification of hazardous waste, project in progress. U.S. Environmental Protection Agency, Cincinnati, 1986). Die Nachteile der ersten Verfahrensgruppe sind besonders die verhältnismäßig leichte Abrasion der Überzüge, woraus sich eine verhältnismäßig große Instabilität des so behandelten Materials ergibt. Der Hauptnachteil der zweiten Verfahrensgruppe ist die beträchtliche Vergrößerung der Abfallmengen.

Zur Beseitigung der Schwermetalle aus den erwähnten Materialien dienen meistens verschiedene Auslaugverfahren, wie z.B. die saure Auswaschung der Metallkationen, oder ihre Überführung in verschiedene Komplexverbindungen. Diese Verfahren eignen sich nur dann, wenn die zu beseitigenden Metalle in geringen Konzentrationen vorliegen. Für Metalle mit größerem Mengenanteil und besonders für Metalle mit amphoterem Charakter, z.B. Zink und Chrom, ist die saure Auswaschung gänzlich ungeeignet. Außerdem wird durch diese Vorgänge die Oberfläche der zu behandelnden Materialien angegriffen, wodurch der Zutritt angreifender Agenzien, wie z.B. der saure Regen oder aggressive Grundwässer, erleichtert wird, so daß diese Materialien nicht mehr den Testanforderungen entsprechen. Sie können im Sinne der geltenden Vorschriften nicht mehr für inert gehalten werden. Oft weisen so behandelte Materialien entschieden schlechtere Stabilitätsparameter auf, als nicht behandelte Materialien.

Die im Anspruch 1 angegebenen Merkmale lösen die Aufgabe, durch Schwermetalle kontaminierte Materialien so zu behandeln, daß sie sich möglichst umweltfreundlich verhalten.

Dadurch, daß die zu behandelnden Materialien in Anwesenheit von Wasser mit Phosphationen zersetzt werden, werden die in den Materialien vorhandenen Schwermetalle in Phosphate umgewandelt, die schwer löslich sind. Dadurch, daß Aluminium-III-Ionen und/oder Fe-III-Ionen zugesetzt werden, werden die überschüssigen Phosphationen gebunden. Dadurch, daß das Gemisch auf einen alkalischen pH-Wert gebracht wird, wird ein höherer Sicherheitsgrad gegen das Herauslösen einzelner Stoffe erreicht, der selbst dann weitgehend erhalten bleibt, wenn die behandelten Materialien saurem Regen und/oder saurem Grundwasser und dergleichen ausgesetzt werden. Durch die Verwendung saurer Reaktanten wird vornehmlich die Oberflächenschicht des zu behandelnden Materials angegriffen, was den Zutritt der Reaktanten erleichtert, so daß die Schwermetalle durch die Bildung schwer löslicher Salze intensiver fixiert werden. Mit der Zugabe der Aluminium-III-Ionen und/oder Eisen-III-Ionen werden die Anionen dieser Reaktanten fixiert und damit ihre Beweglichkeit beseitigt. Durch die Alkalisierung werden auch die letzten Reste der sauren Reaktanten gebunden und das ganze Gemisch in einen stabilen Zustand gebracht.

Durch eine Ausgestaltung des Verfahrens nach Anspruch 2 wird ein Teil der Phosphorsäure durch die Zugabe von Phosphaten und von anderen Säuren ersetzt, die im allgemeinen billiger als die reine Phosphorsäuren sind.

Durch eine Ausgestaltung des Verfahrens nach Anspruch 3 reagieren die in den zu behandelnden Materialien vorhandenen alkalischen Stoffe zumindest teilweise mit den anderen Säuren, die im allgemeinen billiger als reine Phosphorsäuren sind, so daß dadurch eine geringere Menge der teureren Phosphorsäure benötigt wird. Das gilt umso mehr, wenn die anderen Säuren vor der Phosphorsäure zugesetzt werden.

Bei einer Ausgestaltung des Verfahrens nach Anspruch 4 wird über die Neutralisierung saurer Reaktanten hinaus eine beträchtliche Reaktionswärme entwickelt, die zumindest zur teilweisen Trocknung des Reaktionsgemisches führt.

Das erfindungsgemäße Verfahren wird mit Vorteil so durchgeführt, daß man auf das aufzubereitende Material ein Gemisch starker anorganischer Säuren oder organischer Säuren und/oder Phosphorsäuren, oder eine andere Quelle von Phosphatanionen, einwirken läßt. Das Gemisch wird dann so lange gerührt, bis der pH-Wert aufhört zu wachsen. Danach wird ein Lösung von Aluminium-III-Ionen und/oder Eisen-III-Ionen in einer stechiometrischen Menge zugesetzt, die 20 Gew.% der angewandten Gesamtmenge der Phosphat-Ionen entspricht. Nach kurzem Durchrühren wird durch Zugabe einer geeigneten Alkalie der pH-Wert des Reaktionsgemisches auf einen höheren Wert als 8,2 eingestellt. Das so behandelte Material kann als inertes Material verarbeitet werden. Der erreichte Inertisierungsgrad ist so hoch, daß die Endprodukte nicht nur den strengsten vorgeschriebenen Testen für diese Materialien genügen. Dieser Inertisierungsgrad genügt sogar zehnfach strengeren Testbedingungen. Eine so aufbereitete Schlacke aus einer Müllverbrennungsanlage entsprach den TVATestbedingungen nicht nur im Laufe der vorgeschriebenen 48 Stunden sondern sie entsprach den vorgeschriebenen Grenzwerten auch noch nach 240 Stunden.

Die nachfolgenden Beispiele erläutern das Verfahren:

1. Beispiel

100 g Schlacke aus einer Verbrennungsanlage für Stadtmüll mit nachstehender granulometrischer Verteilung

| 0 - 1 mm | 55 Gew. % |
| 1 - 3 mm | 30 Gew. % |
| 3 - 8 mm | 15 Gew. % |

wurde mit 100 ml Wasser, 1,2 g Eisessig und 3,8 g technischer Phosphorsäure (85%) versetzt. Der Reaktionsverlauf wurde mittels der pH-Bestimmung in Fünfminutenintervallen kontrolliert. Nachstehende Werte wurden ermittelt:

| Min. | 0 | 5 | 10 | 15 | 20 |
|------|------|------|------|------|------|
| pH | 1,40 | 3,46 | 4,05 | 4,14 | 4,20 |

Nach zwanzig Minuten dauerndem Rühren wurde vom Reaktionsgemisch das Eluat (87 ml) abgetrennt und in die feuchte Masse 2,5 ml 37%iger Eisen-III-Sulfatlösung in 100 ml Wasser beigemischt. Nach einer Einwirkungszeit von fünf Minuten wurde der pH-Wert des Reaktionsgemisches durch Zugabe von 0,86 g techn. CaO erhöht und die so aufbereitete Schlacke abfiltriert und bei 105°C getrocknet.

Der Inertisierungsgrad wurde mittels der Auslaugungstests nach TVA bestimmt. Die Auslaugbarkeit der Kationen wurde mittels zweier an einander anschließender 24 Stunden dauernder Auslaugversuchen bestimmt, in denen mit $CO_2$ gesättigtes destilliertes Wasser in zehnfacher Menge zugegeben wurde. Die Grenzwerte zusammen mit den bestimmten Werten sind in nachstehender Tabelle aufgeführt:

| Kation | ausgelaugte Menge (mg/l) | | Grenzwerte (mg/l) |
|---|---|---|---|
| | 0 -24 Std. | 24 - 48 Std. | 24 Std. |
| A1 | < 0,03 | 0,3 | 1 |
| Ba | 0,01 | 0,02 | 0,5 |
| Pb | < 0,064 | < 0,064 | 0,1 |
| Cd | < 0,007 | < 0,007 | 0,01 |
| Cr | < 0.01 | < 0,01 | 0,06 |
| Co | < 0,012 | < 0,012 | 0,05 |
| Cu | 0,045 | 0,085 | 0,2 |
| Ni | 0,021 | < 0,017 | 0,2 |
| Zn | < 0,007 | 0,267 | 1 |
| Sn | < 0,152 | < 0,152 | 0,2 |

Stabilitätsteste der Auslaugbarkeit von Anionen wurden aufgrund derselben Verordnung (TVA) durchgeführt. Die untersuchte Probe wurde mit der zehnfachen Wassermenge überschichtet und zweimal nacheinander 24 Stunden lang stehen gelassen. In den so gewonnenen Eluaten wurde der Gehalt an Nitriten, Sulfiten, Phosphaten und der pH-Wert bestimmt. Die ermittelten Werte sind tabellarisch zusammengefaßt:

```
Anion        ausgelaugte Menge (mg/l)        Grenzwerte (mg/l)
             0 - 24 Std.      24 - 48 Std.        24 Std.

NO2-         0,07             0,06                0,1
SO3--        0,075            0,05                0,1
PO4---       0,228 *)         0,033               1,0
pH           6,94             6,88                6 - 12

*) = mg P / 1
```

2) 100 g eines Erdmaterials der Korngröße 0 - 5,6 mm kontaminiert u.a. mit Pb, Zn, Mn, Ni, Cr und Cu wurden mit 120 ml Wasser vemischt. Zu diesem Gemisch wurden 2,2 g konz. $H_2SO_4$ und 5,35 g $Ca(H_2PO_4)_2$ zugesetzt. Nach der Stabilisierung des pH-Wertes auf 4,62 wurde das Eluat in einer Menge von 101 ml abfiltriert und das abgetrennte Erdmaterial wurde dann mit 0,5 g Aluminiumsulfat und 0,5 g Eisen-III-Sulfat versetzt. Nach fünf Minuten Rühren wurde das pH des Reaktionsgemisches durch NaOH-Zugabe auf 10,96 eingestellt. Das Gemisch wurde filtriert und der Filtrationskuchen 10 Stunden bei 105°C getrocknet.

Die aufbereiteten Erdmaterialien wurden mittels der TVA-Teste auf ihren inerten Charakter übeprüft und die ermittelten Werte sind nachstehend aufgeführt:

| Kation | ausgelaugte Menge (mg/l) | | Grenzwerte (mg/l) |
|--------|--------------------------|--------------------------|-------------------|
| | 0 - 24 Std. | 24 - 48 Std. | 24 Std. |
| Al | 0,693 | 0,581 | 1 |
| Ba | 0,03 | 0,02 | 0,5 |
| Pb | < 0,064 | < 0,064 | 0,1 |
| Cd | < 0,007 | < 0,007 | 0,01 |
| Cr | < 0,01 | < 0,01 | 0,06 |
| Co | 0,023 | 0,019 | 0,05 |
| Cu | 0,051 | 0,048 | 0,2 |
| Ni | 0,032 | 0,029 | 0,2 |
| Zn | < 0,007 | 0,128 | 1 |
| Sn | < 0,152 | < 0,152 | 0,2 |

| Anion | ausgelaugte Menge (mg/l) | | Grenzwerte (mg/l) |
|-------|--------------------------|--------------------------|-------------------|
| | 0 - 24 Std. | 24 - 48 Std. | 24 Std. |
| $NO_2-$ | 0,04 | 0,036 | 0,1 |
| $SO_3--$ | 0,068 | 0,059 | 0,1 |
| $PO_4--$ | 0,232 *) | 0,086 | 1,0 |
| pH | 7,22 | 7,16 | 6 - 12 |

*) = mg P / l

**Patentansprüche**

1. Verfahren zur Behandlung von Materialien mit einem Gehalt an Schwermetallen, **gekennzeichnet** durch die Verfahrensschritte:
   - die Materialien werden in Gegenwart von Wasser mit einer solchen Menge von Phosphat-Ionen versetzt, daß das Gemisch einen beständigen durch freie Phosphat-Ionen verursachten pH-Wert von weniger als 6,9 aufweist,
   - das Gemisch wird mit einer solchen Menge Aluminium-III-Ionen und/oder Eisen-III-Ionen versetzt, daß die überschüssigen Phosphat-Ionen gebunden werden,
   - das Gemisch wird auf einen alkalischen pH-Wert gebracht.

2. Verfahren nach Anspruch 1, **dadurch gekennzeichnet,**
   - daß die Phosphat-Ionen durch die Zugabe von Phosphorsäure und/oder durch die Zugabe von Phosphaten und von einer oder mehreren anorganische Säuren eingebracht werden.

3. Verfahren nach Anspruch 1, **dadurch gekennzeichnet,**
   - daß neben der Phosphorsäure auch eine oder mehrere andere Säuren zugegeben werden,
   - vorzugsweise erfolgt die Zugabe der anderen Säuren vor der Zugabe der Phosphorsäre.

4. Verfahren nach Anspruch 1,
**dadurch gekennzeichnet**,
- daß die Alkalisierung mit CaO durchgeführt wird.

Europäisches
Patentamt

# EUROPÄISCHER RECHERCHENBERICHT

Nummer der Anmeldung

EP 93 10 6829

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 156 059 (DEERE & COMPANY) * Seite 2, Zeile 11 - Zeile 22 * * Seite 4, Zeile 14 - Seite 5, Zeile 35 * * Ansprüche * --- | 1-4 | A62D3/00 C02F1/52 |
| A | EP-A-0 335 024 (WHEELABRATOR ENVIRONMETAL SYSTEMS) --- | | |
| A | EP-A-0 224 743 (NUKEM) --- | | |
| A | US-A-3 673 083 (R.D.SAWYER) ----- | | |
| | | | RECHERCHIERTE SACHGEBIETE (Int. Cl.5 ) |
| | | | A62D C02F |

Der vorliegende Recherchenbericht wurde für alle Patentansprüche erstellt

| Recherchenort | Abschlußdatum der Recherche | Prüfer |
|---|---|---|
| DEN HAAG | 09 SEPTEMBER 1993 | DALKAFOUKI A. |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes
  Dokument

EPO FORM 1503 03.82 (P0403)